# EUROPEAN PATENT APPLICATION

(11) **EP 2 747 485 A1**
(43) Date of publication of application: **25.06.2014**
(21) Application number: 12855081.1
(22) Date of filing: 04.12.2012
(51) Int. Cl.: H04W 48/04

(54) **TERMINAL FREQUENCY-BAND ADAPTATION METHOD AND TERMINAL**

(30) Priority: 06.12.2011 CN 201110401197
(71) Applicant: Huawei Device Co., Ltd., Shenzhen, Guangdong 518129 (CN)
(72) Inventor: LIU, Wei, Shenzhen Guangdong 518129 (CN); WU, Qiaomin, Shenzhen Guangdong 518129 (CN)
(74) Representative: Goddar, Heinz J.
(86) International application number: PCT/CN2012/085842
(87) International publication number: WO 2013/083027

(57) **Abstract**

The present invention discloses a method and a terminal for adapting a frequency band of the terminal. The method includes: acquiring location information of a terminal; according to configuration information of the terminal, determining a forbidden frequency band of the terminal at a location indicated by the location information; and forbidding the terminal to register for the forbidden frequency band. The method and the terminal provided in embodiments of the present invention can implement adaptation of a frequency band of the terminal at the terminal side, and achieve a purpose of restricting the terminal from using a forbidden frequency band of the terminal within a preset area (where the preset area may be a country), thereby reducing alteration costs of a network side.

## Description

### FIELD OF THE INVENTION

The present invention relates to the field of communications, and in particular, to a method and a terminal for adapting a frequency band of the terminal.

### BACKGROUND OF THE INVENTION

With the diversification and complication of global wireless communication services, an operator has higher and higher requirements for a terminal, and puts forward a series of new complicated requirements for the terminal.

The requirements are as follows: An operator S has available networks in three frequency bands, namely, A/B/C, in an area T (where this area may be a country), and in order to ensure that a network in a frequency band C is not overloaded, it is required that a customized terminal, in the area T, can only use networks in two frequency bands, namely, A/B, and is not allowed to use the network in the frequency band C.

For this requirement, in the prior art, when the terminal searches and finds in the area T a cell of the frequency band C, and tries to register for the frequency band C, a network side identifies whether the terminal is a restricted terminal; if the terminal is a restricted terminal, access of the restricted terminal is denied, thereby achieving a purpose of restricting the terminal from using the frequency band C in the area T.

In the prior art, since the network side is required to perform judgment on the restricted terminal, a network side system needs to be altered and upgraded, which increases consumption of resources of the network side system, and meanwhile also increases a system alteration cost and a network operating cost of the operator.

### SUMMARY OF THE INVENTION

Embodiments of the present invention provide a method and a terminal for adapting a frequency band of the terminal, which can implement adaptation of the frequency band at the terminal side, and achieve a purpose of restricting the terminal from using a forbidden frequency band in a preset area, thereby reducing alteration costs of a network side.

In one aspect, an embodiment of the present invention provides a method for adapting a frequency band of a terminal, where the method includes:
acquiring location information of a terminal;
according to configuration information of the terminal, determining a forbidden frequency band of the terminal at a location indicated by the location information; and
forbidding the terminal to register for the forbidden frequency band.

In another aspect, an embodiment of the present invention provides a terminal for adapting a frequency band of the terminal, where the terminal includes:
a location information acquiring module, configured to acquire location information of the terminal;
a configuration information storing module, configured to store configuration information of the terminal;
a matching module, configured to, according to the configuration information, determine a forbidden frequency band of the terminal at a location indicated by the location information; and
a frequency band adaptation module, configured to forbid the terminal to register for the forbidden frequency band.

Compared with the prior art, the embodiments of the present invention have the following beneficial effects:

The method and the terminal provided in the embodiments of the present invention can implement adaptation of a frequency band of the terminal at the terminal side, and achieve the purpose of restricting the terminal from using a forbidden frequency band in the preset area, without requiring the network side to identify frequency band permission of the terminal, that is, the adaptation of the frequency band of the terminal can be implemented at the terminal side in a case of not altering the network side, thereby reducing alteration costs of the network side and saving system resources of the network side.

### BRIEF DESCRIPTION OF THE DRAWINGS

To illustrate the technical solutions of the embodiments of the present invention more clearly, the accompanying drawings required for describing the embodiments are introduced briefly in the following. Apparently, the accompanying drawings in the following descriptions are merely some of the embodiments of the present invention, and persons of ordinary skill in the art can further acquire other drawings according to these accompanying drawings without creative efforts.
FIG. 1 is a flow chart of a method for adapting a frequency band of a terminal according to an embodiment of the present invention;
FIG. 2 is a flow chart of another method for adapting a frequency band of a terminal according to an embodiment of the present invention;
FIG. 3 is a flow chart of another method for adapting a frequency band of a terminal according to an embodiment of the present invention;
FIG.s 4A and 4B is a flow chart of another method for adapting a frequency band of a terminal according to an embodiment of the present invention;
FIG. 5 is a schematic structural diagram of a terminal for adapting a frequency band of the terminal according to an embodiment of the present invention;
FIG. 6 is a schematic structural diagram of another terminal for adapting a frequency band of the terminal according to an embodiment of the present invention;
FIG. 7 is a schematic structural diagram of another terminal for adapting a frequency band of the terminal according to an embodiment of the present invention;
FIG. 8 is a schematic structural diagram of another terminal for adapting a frequency band of the terminal according to an embodiment of the present invention; and
FIG. 9 is a schematic structural diagram of another terminal for adapting a frequency band of the terminal according to an embodiment of the present invention.

### DETAILED DESCRIPTION OF THE EMBODIMENTS

The technical solutions of embodiments of the present invention are described clearly and completely in the following with reference to the accompanying drawings in the embodiments of the present invention. Apparently, the described embodiments are only some embodiments of the present invention, rather than all embodiments of the present invention. All other embodiments acquired by persons of ordinary skill in the art based on the embodiments of the present invention without creative efforts shall fall within the protection scope of the present invention.

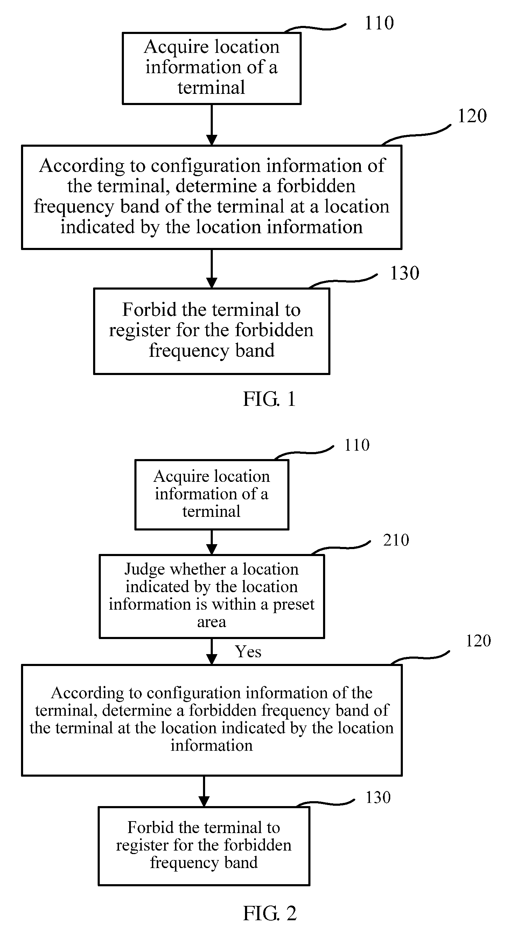

As shown in FIG. 1, in an embodiment of a method for adapting a frequency band of a terminal according to the present invention, the method may include the following steps:
110: Acquire location information of a terminal.
   The terminal acquires the current location information. The terminal may acquire the location information through various manners, for example, acquiring through a wireless network (such as through a Wi-Fi network) of an operator, acquiring by a satellite positioning system, or acquiring through an IP network that the terminal is currently connected to. How to acquire the current location information of the terminal is not specifically limited in the present invention.
120: According to configuration information of the terminal, determine a forbidden frequency band of the terminal at a location indicated by the location information.
   After acquiring the current location information, the terminal determines the forbidden frequency band at the current location according to preset configuration information in the terminal.
130: Forbid the terminal to register for the forbidden frequency band.
   If it is determined in step 120 that a forbidden frequency band exists at the location of the terminal, the terminal is forbidden to register for the forbidden frequency band at the location. If frequency bands in the forbidden frequency band are forbidden from being registered, for these frequency bands which are forbidden from being registered, it is no need to repeat to forbid them from being registered. In the present invention, the forbidding registering a certain frequency band includes not searching for the frequency band when searching a network, or when searching a network, searching for the frequency band but not initiating registration for the frequency band. Another common manner may also be adopted, so that the terminal does not register for the forbidden frequency band, which is not limited in this specification.

Optionally, if it is determined in step 120 that the terminal has a forbidden frequency band at the location of the terminal and there are more than one forbidden frequency band, the terminal may be forbidden to register for one or more of the forbidden frequency bands, that is, all the forbidden frequency bands may be forbidden from being registered in one time or in multiple times.

The location indicated by the location information of the terminal may be a certain country or region, and a range of the location may be as large as a country and even be a larger range, or may be as small as a village and even be a smaller range. The size of the range of the location is not limited in the embodiment of the present invention.

The configuration information of the terminal may be configured with one or more available and/or forbidden frequency bands of the terminal at one or more preset locations.

In step 110, when it is acquired that the location indicated by the location information of the terminal is a preset location (which may be a preset country), through step 120, the forbidden frequency band of the terminal at the preset location is determined according to the configuration information of the terminal, and then through step 130, the terminal is forbidden to register for the forbidden frequency band, thereby implementing the adaptation of a frequency band of the terminal at the terminal side and achieving a purpose of restricting the terminal from using the forbidden frequency band at the preset location. A network side is not required to identify frequency band permission of the terminal, and the network side does not need to be altered, thereby alleviating the load of the network side and reducing a network operating cost. The frequency band permission of the terminal refers to permission for a terminal to register for a frequency band, that is, whether the terminal is permitted to register for a certain frequency band.

As shown in FIG. 2, in an embodiment of the method for adapting a frequency band of a terminal according to the present invention, the method may further include steps:
210: Judge whether a location indicated by the location information is within a preset area; when a judgment result is yes, perform step 120.

In this case, step 120 is specifically: According to configuration information of the terminal, determining a forbidden frequency band of the terminal in the preset area.

The preset area may be one or more certain preset countries, and may also be an area formed by one preset location or combination of multiple preset locations in the configuration information.

In this embodiment, the preset area is set, and the configuration information of the terminal in the preset area is not determined until it is judged that the location of the terminal is within the preset area. That is, in this case, an operator only wants to restrict usage of certain frequency bands in the preset area. Therefore, when it is judged that the terminal is not currently located within the preset area, an operation of determining the forbidden frequency band in a current area and subsequent operations do not need to be performed, thereby improving the operating efficiency of the terminal and reducing power consumption of the terminal.

In an embodiment of the method for adapting a frequency band of a terminal provided in the present invention, the preset area may be a preset country. The preset country may be one or more countries.

In an embodiment of the method for adapting a frequency band of a terminal provided in the present invention, step 130 may be specifically: not searching for the forbidden frequency band when searching a network, or when searching a network, searching for the forbidden frequency band but not initiating registration for the forbidden frequency band. Step 130 may be implemented by setting the forbidden frequency band to be search-forbidden or registration-forbidden. The embodiment of the present invention may include various common methods for restricting the terminal from registering for the forbidden frequency band. A purpose of restricting the terminal from using the forbidden frequency band can be achieved as long as the terminal is restricted from registering for the forbidden frequency band, thereby implementing the adaptation of the frequency band of the terminal. The method for restricting the terminal from registering for the forbidden frequency band is not limited in the present invention.

In an embodiment of the method for adapting a frequency band of a terminal provided in the present invention, the location information may be a mobile country code MCC value, and step 110 may be specifically: searching for a cell in frequency bands supported by the terminal, and if a cell is found, acquiring the MCC value from a broadcast message of the cell.

Alternatively, the location information is satellite positioning location information, and step 110 may be specifically: acquiring the satellite positioning location information of the terminal through a satellite positioning system.

The frequency bands supported by the terminal may be a list which is of the frequency bands supported by the terminal and is stored in the terminal.

The satellite positioning location information may be GPS positioning location information or other location information which is positioned through a satellite. A GPS (Global Positioning System) refers to a global positioning system, through which real-time positioning may be performed in a global range. A current terminal can support a GPS function, and can position a location of the terminal through the GPS. The satellite positioning location information may be compared with boarder location data of countries, so as to acquire a country that the location which is of the terminal and is indicated by the location information belongs to.

The MCC (Mobile Country Code) refers to a mobile country number or a mobile country code, which is a globally unique country identification standard and indicates a country that a mobile user or system belongs to, where the MCC value corresponding to each country is fixed and unique. Therefore, the terminal can accurately determine a country that the location of the terminal belongs to through acquiring the MCC value.

In an embodiment of the method for adapting a frequency band of a terminal provided in the present invention, the location information may be the mobile country code MCC value, and step 110 may be specifically: searching for a cell in frequency bands supported by the terminal, and if a cell is found, acquiring the MCC value from the broadcast message of the cell.

The method further includes: judging whether a frequency band that the found cell resides in belongs to the forbidden frequency band; if no, registering for the frequency band that the cell resides in, and if yes, executing the forbidding the terminal to register for the forbidden frequency band, where the forbidding the terminal to register for the forbidden frequency band is specifically: not initiating registration for the frequency band that the cell resides in.

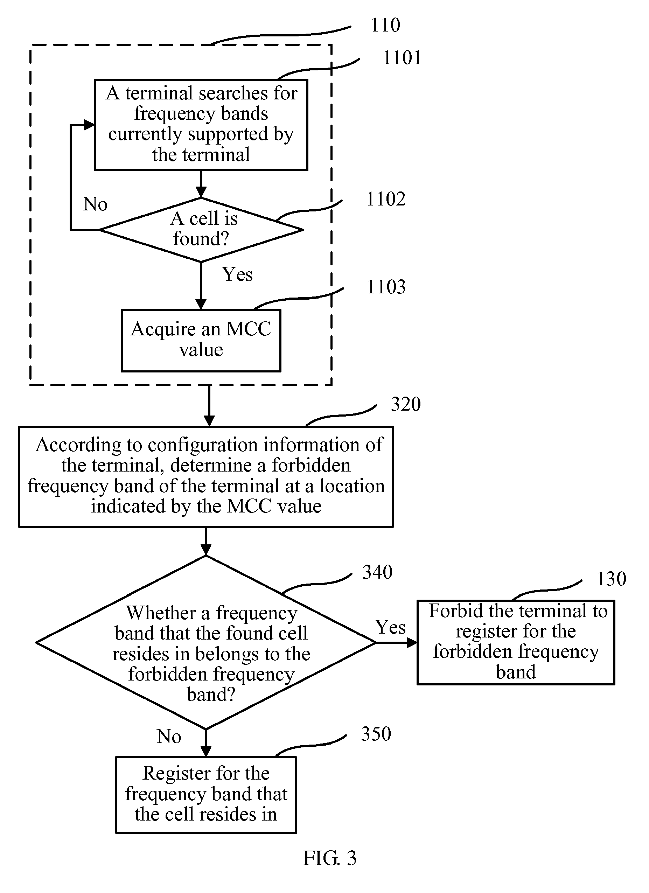

FIG. 3 is taken as an example to describe this embodiment specifically. As shown in FIG. 3, step 110 may include steps:
1101: The terminal searches for frequency bands currently supported by the terminal.
1102: Judge whether a cell is found; if yes, proceed to step 1103; and if no, proceed to step 1101.

In step 1101, the terminal may search for frequency bands currently supported by the terminal according to steps of existing protocols associated with network searching or frequency band searching. If a cell is not found in a first frequency band of the frequency bands currently supported by the terminal, a next frequency band, namely a second frequency band, of the frequency bands currently supported by the terminal is continued to be searched. If a cell is not found yet, a third frequency band is continued to be searched, until the cell is found. Then, proceed to step 1103; otherwise, step 1101 is constantly repeated to continue searching the frequency bands currently supported by the terminal.

1103: Acquire an MCC value. The MCC value may be acquired from a broadcast message of the cell, and the MCC value may also be acquired through another common method, which is not limited in the embodiment of the present invention. The broadcast message of the cell carries information of a PLMN (Public Land Mobile Network, public land mobile network) that the cell belongs to, and the PLMN information includes the MCC value, so that the MCC value may be acquired from the broadcast message of the cell.

Step 120 may specifically be the following step:
320: According to configuration information of the terminal, determine a forbidden frequency band of the terminal at a location indicated by the MCC value.

As shown in FIG. 3, the method may further include the following steps:
340: Judge whether a frequency band that the found cell resides in belongs to the forbidden frequency band; if yes, proceed to step 130; and if no, proceed to step 350.
350: Register for the frequency band that the cell resides in.

Optionally, in this embodiment, step 130 may be performed before step 340, so that when it is judged to be yes in step 340, the process may be terminated.

In this embodiment, as shown in FIG. 3, step 130 may also be specifically: forbidding the terminal to register for the frequency band that the cell resides in. In this way, when the number of the forbidden frequency bands is more than one, all the forbidden frequency bands may not be forbidden from being registered in one time; instead, when the frequency band that the found cell resides in belongs to the forbidden frequency bands, the frequency band that the cell resides in is forbidden from being registered. In this way, through multiple times of network searching, the forbidden frequency bands may be forbidden from being registered one by one. In the present invention, the forbidding registering for a certain frequency band includes not searching for the frequency band when searching a network, or when searching a network, searching for the frequency band but not initiating registration for the frequency band. The forbidding the terminal to register for the frequency band that the cell resides in includes not searching for the frequency band that the cell resides in when searching a network, or when searching a network, searching for the frequency band that the cell resides in but not initiating registration for the frequency band that the cell resides in.

In this embodiment, when the frequency band that the found cell resides in belongs to the forbidden frequency bands, the terminal may be forbidden to register for one or more of the forbidden frequency bands. When the terminal is forbidden to register for one of the forbidden frequency bands, the terminal may be forbidden to register for the frequency band that the cell resides in. The terminal may also be forbidden to register for all frequency bands in the forbidden frequency bands in one time.

In an embodiment of the method for adapting a frequency band of a terminal provided in the present invention, the location information may be the mobile country code MCC value, and step 110 may be specifically: searching for a cell in frequency bands supported by the terminal, and if a cell is found, acquiring the MCC value from the broadcast message of the cell.

The method may further include: if it is judged that the location indicated by the location information is not within the preset area, registering for the frequency band that the cell resides in. In this situation, when the terminal is not in the preset area, and the usage of the frequency bands is not restricted, the frequency band that the cell resides in may be directly registered, and the usage of the frequency band is not restricted. That is, in this situation, the operator only restricts the terminal from using one or more certain frequency bands in one or more certain preset areas, and does not restrict the usage of frequency bands when the terminal is not in the preset area.

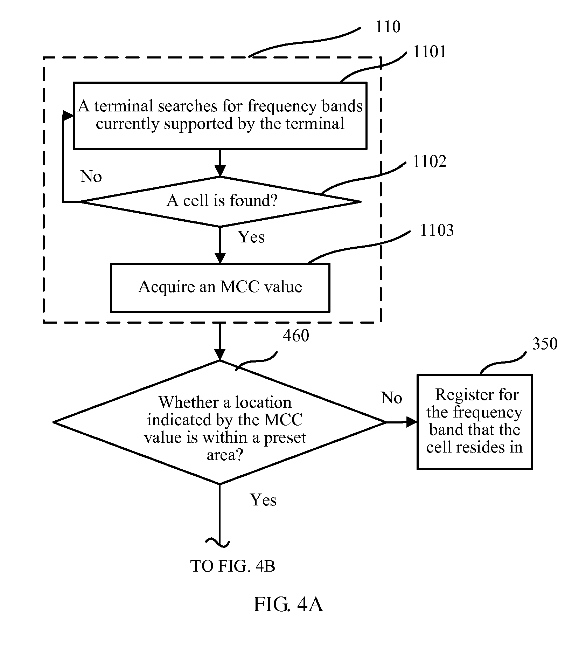

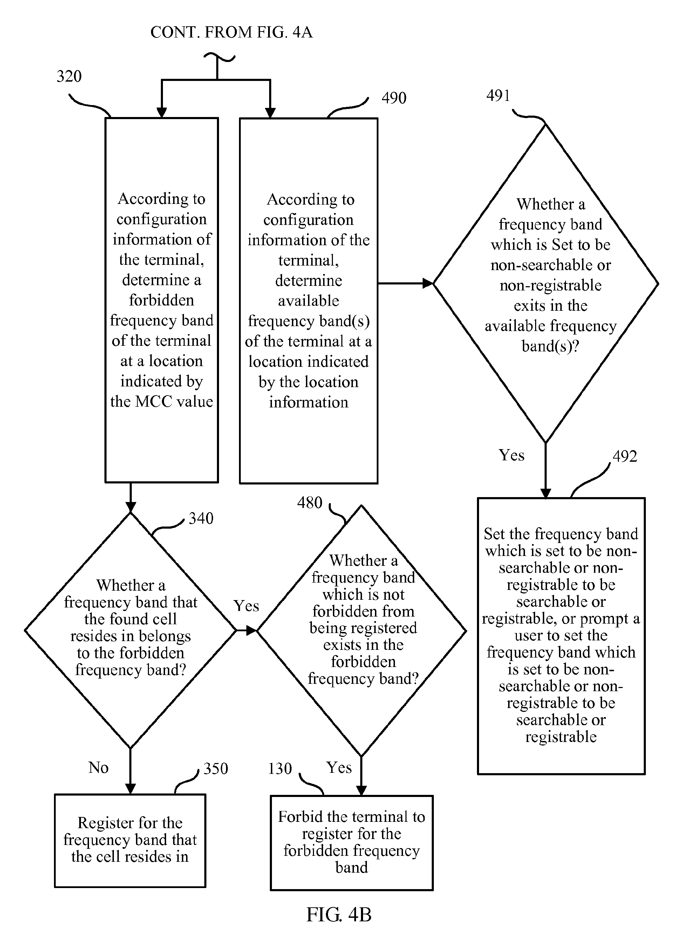

FIG. 4 is taken as an example to describe this embodiment. As shown in FIG. 4, among the steps of the method, the following steps may be further included between step 110 and step 320:
460: Judge whether a location indicated by the MCC value is within a preset area; if yes, proceed to step 320; and if no, proceed to step 350.
350: Register for the frequency band that the cell resides in.

In FIG. 4, step 130 may also be specifically: forbidding the terminal to register for the frequency band that the cell resides in. For beneficial effects, reference may be made to the description in the foregoing embodiment, which is not repeatedly described here again.

In an embodiment of the method for adapting a frequency band of a terminal provided in the present invention, before step 130, the method may further include: determining that a frequency band which is not forbidden from being registered exists in the forbidden frequency bands. FIG. 4 is taken as an example to describe this embodiment. As shown in FIG. 4, the method may further include the following step:
480: Judge whether a frequency band which is not forbidden from being registered exists in the forbidden frequency band; if yes, proceed to step 130; and if no, the process may be terminated. In this method, considering that some frequency bands in the forbidden frequency bands are forbidden from being registered, for these frequency bands which are forbidden from being registered, registration is not repeatedly forbidden again. In this way, repeated operations on the terminal may be avoided, so that the process is optimized, thereby improving the operating efficiency of the terminal, and reducing the power consumption of the terminal.

In an embodiment of the method for adapting a frequency band of a terminal provided in the present invention, as shown in FIG. 4, the method may further include the following steps:
490: According to the configuration information of the terminal, determine an available frequency band of the terminal at the location indicated by the location information.
491: Judge whether a frequency band which is set to be non-searchable or non-registrable exists in the available frequency band; and if yes, proceed to step 492.

In step 491, if a judgment result is no, step 491 may be terminated.

492: Set the frequency band which is set to be non-searchable or non-registrable to be searchable or registrable, or prompt a user to set the frequency band which is set to be non-searchable or non-registrable to be searchable or registrable.

In FIG. 4, step 490 is performed after it is judged to be yes in step 460, and step 490 may also be performed before or after any step after step 110. In this way, a case that the terminal has no searchable or registrable frequency band after the forbidden frequency band of the terminal at the location is forbidden from being registered may be prevented, that is, it may be ensured that after the forbidden frequency band of the terminal at the location is forbidden from being registered, some frequency bands are still available to the terminal.

Optionally, in step 492, one or more of the frequency bands which are set to be non-searchable or non-registrable may be set to be searchable or registrable, or a user may also be prompted to set one or more of the frequency bands which are set to be non-searchable or non-registrable to be searchable or registrable.

The setting the frequency band to be searchable or registrable is merely a manner for setting the frequency band to be available, and another common method may be adopted to set the frequency band to be available, which is not limited in the present invention.

In an embodiment of the method for adapting a frequency band of a terminal provided in the present invention, the method may further include: when the terminal receives an instruction for querying or setting a frequency band parameter from a user, according to the configuration information of the terminal, providing the user with a frequency band parameter interface to query or set the frequency band, where the interface only displays an available frequency band of the terminal at the location, or displays all frequency bands supported by the terminal, but the forbidden frequency band at the location is in a non-selectable state. That is, when the user queries or sets the frequency band parameter, in order to prevent the user from setting or using the forbidden frequency band of the terminal at the location, the forbidden frequency band is not displayed, or is displayed but cannot be selected. In this way, process steps can be economized; meanwhile, an incorrect operation of the user may be avoided, and the user experience for the terminal is improved.

Location identification may be stored in the terminal and is used to indicate the location information of the terminal, where the indicated location information may include: unknown, a preset area, and a non-preset area; and the location identification is set to be unknown after the terminal is rebooted.

After the terminal searches and finds a cell and acquires the MCC value, the location information indicated by the location identification is judged. If it is a preset area, the location information indicated by the location identification does not change. If it is a non-preset area and the MCC value is an MCC value of a preset area, the location information indicated by the location identification is set to be a preset area. If it is a non-preset area and the MCC value is an MCC value of a non-preset area, the location information indicated by the location identification does not change.

If the location information which is of the terminal and is indicated by the location identification is unknown and the MCC value is an MCC value of a preset area, the location information indicated by the location identification is set to be a preset area; and if the location information which is of the terminal and is indicated by the location identification is unknown and the MCC value is an MCC value of a non-preset area, the location information indicated by the location identification is set to be a non-preset area.

When the terminal receives the instruction for querying or setting the frequency band parameter from the user, it is judged whether the location information indicated by the location identification is a preset area; and if yes, the user is provided with the frequency band parameter interface to query or set the frequency band, where the interface only displays an available frequency band of the terminal in the preset area, or displays all frequency bands supported by the terminal but the forbidden frequency band in the preset area is in a non-selectable state. When the preset area is a certain country, a purpose of restricting the terminal from using the forbidden frequency band in the country can be achieved. When the user leaves the country for a foreign country, if a frequency band parameter of the terminal needs to be set, the user needs to reboot the terminal and then set the frequency band parameter.

When the MCC value is judged, if the MCC value is equal to an MCC value which is used for test, the location information indicated by the location identification may not change.

The preset area in the indicated location information may specifically be a certain country, and the indicated location information may specifically include: unknown, domestic, and oversea. The indicated location information may also be other location information which has a meaning similar to the terms unknown, domestic, and oversea. In this embodiment, the terms domestic and oversea are both given for a certain country.

In this embodiment, through setting of the location identification, when the terminal resides in the preset area, the user may be provided with the frequency band parameter interface to query or set the frequency band. The interface only displays an available frequency band of the terminal at the location, or displays all frequency bands supported by the terminal but the forbidden frequency band at the location is in a non-selectable state, thereby preventing the user from setting and using the forbidden frequency band of the terminal at the location. In this way, process steps may be economized; meanwhile, an incorrect operation of the user may be avoided and the user experience for the terminal is improved. When the preset area is a preset country and the terminal travels near a boarder line, if the terminal is not rebooted, the frequency band on the frequency band parameter interface of the terminal may not change frequently (a frequency band in the preset country is displayed sometimes, and a frequency band outside the preset country is displayed sometimes), and is displayed constantly as the frequency band in the preset country. Frequent switch of frequency bands does not occur either (a frequency band in the preset country is searched sometimes, and a frequency band outside the preset country is searched sometimes), and searches constantly for an available frequency band in the preset country, and does not bring a feeling of instability of the network for the user, thereby improving the user experience in a certain degree.

In an embodiment of the method for adapting a frequency band of a terminal provided in the present invention, the configuration information of the terminal may be correspondence between a location of the terminal and a frequency band, and may include correspondence between the location of the terminal and an available frequency band at the location and/or correspondence between the location of the terminal and a forbidden frequency band at the location. When the configuration information is the correspondence between the location of the terminal and the available frequency band at the location, the forbidden frequency band at the location may not belong to the available frequency band at the location. When the configuration information is the correspondence between the location of the terminal and the forbidden frequency band at the location, the available frequency band at the location may not belong to the forbidden frequency band at the location.

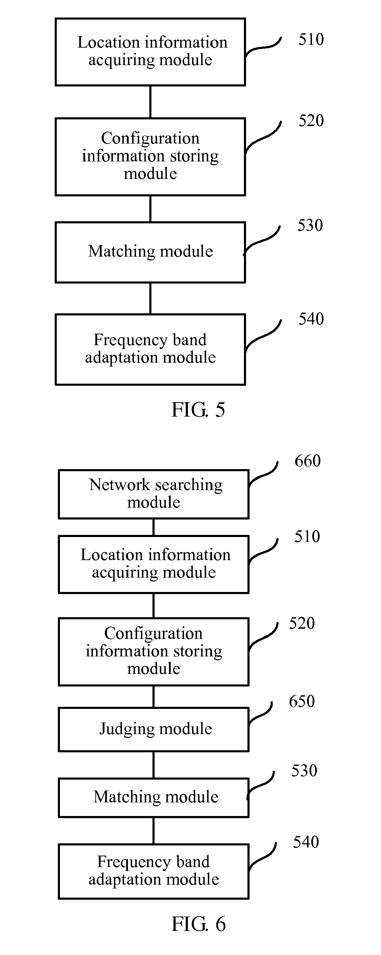

An embodiment of the present invention further provides a terminal for adapting a frequency band of the terminal. What is shown in FIG. 5 is an embodiment of a terminal according to the present invention. In this embodiment, the terminal includes:
a location information acquiring module 510 is configured to acquire location information of the terminal, where reference may be specifically made to the description in step 110;
a configuration information storing module 520 is configured to store configuration information of the terminal, where
the configuration information may be configuration information delivered by a network side to the terminal, or configuration information preset when the terminal leaves the factory;
a matching module 530 is configured to, according to the configuration information, determine a forbidden frequency band of the terminal at a location indicated by the location information, where
the configuration information includes correspondence between a location of the terminal and a frequency band, which may include correspondence between the location of the terminal and an available frequency band at the location and/or correspondence between the location of the terminal and the forbidden frequency band at the location; and when the configuration information is the correspondence between the location of the terminal and the available frequency band at the location, the matching module 530 may determine that a frequency band which does not belong to the available frequency band at the location is a forbidden frequency band at the location; and
a frequency band adaptation module 540 is configured to forbid the terminal to register for the forbidden frequency band.

If the matching module 530 determines that the terminal has a forbidden frequency band at the location, the frequency band adaptation module 540 forbids the terminal to register for the forbidden frequency band at the location. If some frequency bands in the forbidden frequency bands are forbidden from being registered, for these frequency bands which are forbidden from being registered, registration is not repeatedly forbidden again. In the present invention, the forbidding registering for a certain frequency band includes not searching for the frequency band when searching a network, or when searching a network, searching for the frequency band but not initiating registration for the frequency band. Another common manner may also be adopted, so that the terminal does not register for the forbidden frequency band, which is not limited in this specification.

Optionally, if the matching module 530 determines that the terminal has a forbidden frequency band at the location and there are more than one forbidden frequency bands, the terminal may be forbidden to register for one or more of the forbidden frequency bands, that is, all the forbidden frequency bands may be forbidden from being registered in one time or in multiple times.

The location indicated by the location information of the terminal may be a certain country or region, and a range of the location may be as large as a country and even be a larger range, and may be as small as a village and even be a smaller range. The size of the range of the location is not limited in the embodiment of the present invention.

The configuration information of the terminal may be configured with one or more available and/or forbidden frequency bands of the terminal at one or more preset locations.

In the embodiment of the present invention, the location information acquiring module 510 acquires the location information of the terminal, the matching module 530 determines the forbidden frequency band of the terminal at the location indicated by the location information, and then the frequency band adaptation module 540 forbids the terminal to register for the forbidden frequency band, thereby implementing adaptation of a frequency band of the terminal at the terminal side, and achieving a purpose of restricting the terminal from using the forbidden frequency band at the preset location. The network side is not required to identify frequency band permission of the terminal, and the network side does not need to be upgraded or reconstructed, thereby alleviating the load of the network side and reducing a network operating cost.

In an embodiment of a terminal provided in the present invention, as shown in FIG. 6, the terminal further includes:
a judging module 650, configured to judge whether a location indicated by the location information is within a preset area.

The matching module 530 is specifically configured to, when the judging module 650 judges that the location indicated by the location information is within the preset area, according to the configuration information, determine a forbidden frequency band of the terminal at the location indicated by the location information.

The preset area may be one or more certain preset countries, and may also be an area formed by one preset location or combination of multiple preset locations in the configuration information.

In this embodiment, the preset area is set, and the configuration information of the terminal in the preset area is not determined until the judging module 650 judges that the location of the terminal is within the preset area. That is, in this case, an operator only wants to restrict usage of certain frequency bands in the preset area. Therefore, when it is judged that the terminal is not currently located within the preset area, an operation of determining the forbidden frequency band in a current area and subsequent operations do not need to be performed, thereby improving operating efficiency of the terminal and reducing power consumption of the terminal.

In an embodiment of the terminal provided in the present invention, the preset area is specifically a preset country. The preset country may be one or more countries.

In an embodiment of the terminal provided in the present invention, the frequency band adaptation module 540 is specifically configured to configure that the terminal does not search for the forbidden frequency band when searching a network, or configure that the terminal, when searching a network, searches for the forbidden frequency band but does not initiate registration for the forbidden frequency band. The frequency band adaptation module 540 in the embodiment of the present invention may include various common methods which can restrict the terminal from registering for the forbidden frequency band. A purpose of restricting the terminal from using the forbidden frequency band can be achieved as long as the terminal can be restricted from registering for the forbidden frequency band, thereby implementing the adaptation of a frequency band of the terminal. The method for restricting the terminal from registering for the forbidden frequency band is not limited in the present invention.

In an embodiment of the terminal provided in the present invention, the location information is specifically a mobile country code MCC value, and as shown in FIG. 6, the terminal further includes:
a network searching module 660, configured to search for a cell in frequency bands supported by the terminal.

The location information acquiring module 510 is specifically configured to: when the network searching module 660 searches for a cell in the frequency bands supported by the terminal and finds a cell, acquire the MCC value from a broadcast message of the cell. For the MCC, reference may be specifically made to the description in the method embodiment, which is not repeatedly described here again. The terminal may accurately determine a country that the location of the terminal belongs to through acquiring the MCC value.

In an embodiment of the terminal provided in the present invention, the location information is specifically satellite positioning location information, and the location information acquiring module 510 is specifically configured to acquire the satellite positioning location information of the terminal through a satellite positioning system. The satellite positioning location information may be GPS positioning location information or other location information which is positioned through a satellite. The satellite positioning location information may be compared with boarder location data of countries, so as to acquire a country that the location which is of the terminal and is indicated by the location information belongs to. For the GPS, reference may be specifically made to the description in the method embodiment, which is not repeatedly described here again.

The location information acquiring module 510 may also acquire the location information of the terminal through another method, which is not limited in the present invention.

In an embodiment of the terminal provided in the present invention, the matching module 530 is further configured to, according to the configuration information, determine an available frequency band of the terminal at a location indicated by the location information.

The frequency band adaptation module 540 is further configured to: when a frequency band which is set to be non-searchable or non-registrable exists in the available frequency bands, set the frequency band which is set to be non-searchable or non-registrable to be searchable or registrable, or prompt a user to set the frequency band which is set to be non-searchable or non-registrable to be searchable or registrable. By means of the function of the frequency band adaptation module 540, a case that the terminal has no searchable or registrable frequency band after the forbidden frequency band of the terminal at the location is forbidden from being registered may be prevented, that is, it may be ensured that after the forbidden frequency band of the terminal at the location is forbidden from being registered, some frequency bands are still available to the terminal.

Optionally, the frequency band adaptation module 540 may set one or more of the frequency bands which are set to be non-searchable or non-registrable to be searchable or registrable, and may also prompt a user to set one or more of the frequency bands which are set to be non-searchable or non-registrable to be searchable or registrable.

The setting the frequency band to be searchable or registrable is merely a manner that the frequency band adaptation module 540 sets the frequency band to be available, and the frequency band adaptation module 540 may also adopt another common method to set the frequency band to be available, which is not limited in the present invention.

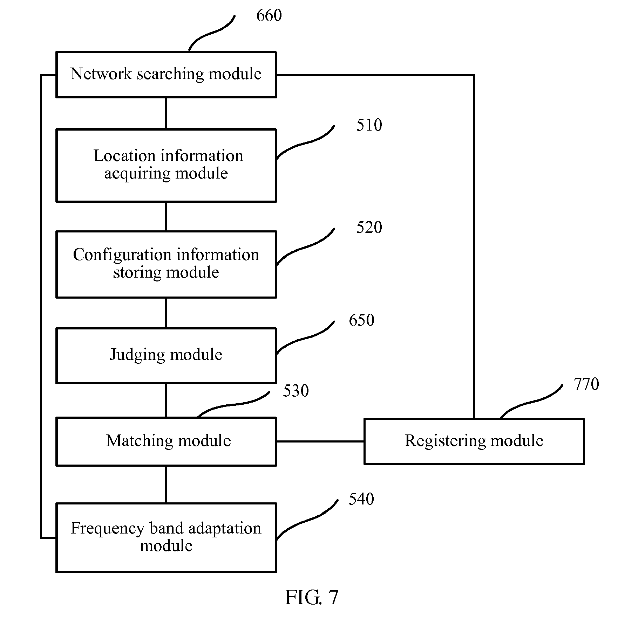

In an embodiment of a terminal provided in the present invention, the location information is specifically a mobile country code MCC value, and as shown in FIG. 7, the terminal further includes:
a network searching module 660, configured to search for a cell in frequency bands supported by the terminal.

The location information acquiring module 510 is specifically configured to: when the network searching module 660 searches for a cell in the frequency bands supported by the terminal and finds a cell, acquire the MCC value from a broadcast message of the cell.

The MCC value may be acquired from the broadcast message of the cell, and the MCC value may also be acquired through another common method, which is not limited in the embodiment of the present invention. The broadcast message of the cell carries information of a PLMN (Public Land Mobile Network, public land mobile network) that the cell belongs to, and the PLMN information includes the MCC value, so that the MCC value may be acquired from the broadcast message of the cell.

The terminal further includes:
a registering module 770, configured to: when a frequency band that the cell found by the network searching module 660 resides in does not belong to the forbidden frequency band, register for the frequency band that the cell resides in.

The frequency band adaptation module 540 is specifically configured to: when a frequency band that the cell found by the network searching module 660 resides in belongs to the forbidden frequency bands, forbid the terminal to register for the frequency band that the cell resides in. In this way, when the number of the forbidden frequency bands is more than one, all the forbidden frequency bands may not be forbidden from being registered in one time; instead, when the frequency band that the found cell resides in belongs to the forbidden frequency bands, the frequency band that the cell resides in is forbidden from being registered. In this way, through multiple times of network searching, the forbidden frequency bands may be forbidden from being registered one by one. The frequency band adaptation module 540 may also be specifically configured to: after the matching module 530 determines the forbidden frequency band, or when the frequency band that the cell found by the network searching module 660 resides in belongs to the forbidden frequency bands, forbid the terminal to register for the forbidden frequency band. That is, the forbidden frequency bands may also be forbidden from being registered in one time.

In the present invention, the forbidding registering for a certain frequency band includes not searching for the frequency band when searching a network, or when searching a network, searching for the frequency band but not initiating registration for the frequency band. The forbidding the terminal to register for the frequency band that the cell resides in includes not searching for the frequency band that the cell resides in when searching a network, or when searching a network, searching for the frequency band that the cell resides in but not initiating registration for the frequency band that the cell resides in.

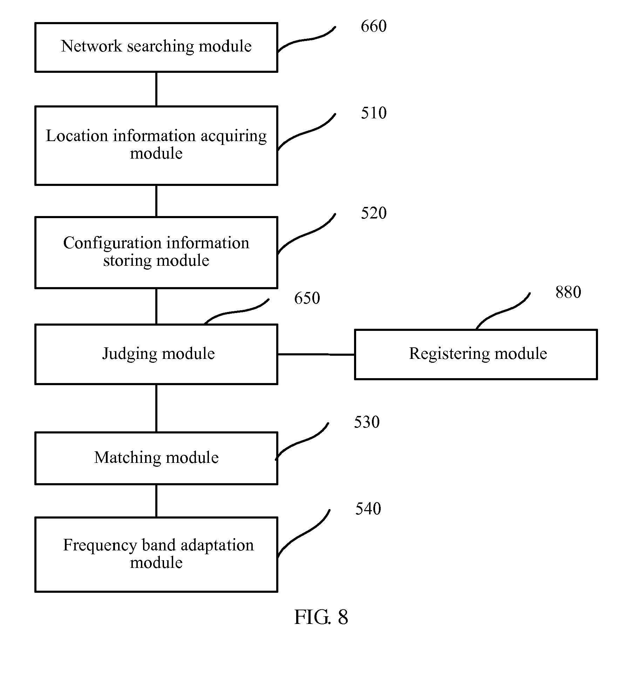

In an embodiment of a terminal provided in the present invention, the location information is specifically a mobile country code MCC value, and as shown in FIG. 8, the terminal further includes:
a network searching module 660, configured to search for a cell in frequency bands supported by the terminal.

The location information acquiring module 510 is specifically configured to: when the network searching module 660 searches for a cell in the frequency bands supported by the terminal and finds a cell, acquire the MCC value from a broadcast message of the cell.

The terminal further includes:
a registering module 880, configured to: when the judging module 650 judges that the location indicated by the location information is not within the preset area, register for a frequency band that the cell resides in.

When the judging module 650 judges that the location indicated by the location information is within the preset area, the matching module 530 determines a forbidden frequency band of the terminal in the preset area.

In this situation, an operator only restricts the terminal from using one or more certain frequency bands in one or more certain preset areas, and does not restrict usage of frequency bands when the terminal is not in the preset area. When the terminal is not in the preset area, the usage of the frequency band is not restricted, the frequency band that the cell resides in can be directly registered, and the usage of the frequency band is not required to be restricted.

In the foregoing embodiment of the terminal provided in the present invention, the frequency band adaptation module 540 may be specifically configured to: when it is determined that some frequency bands in the forbidden frequency bands are not forbidden from being registered, forbid the terminal to register for the forbidden frequency bands. In this way, when some frequency bands in the forbidden frequency bands are forbidden from being registered, for these frequency bands which are forbidden from being registered, registration is not repeatedly forbidden again. In this way, repeated operations on the terminal may be avoided, so that a process is optimized, thereby improving the operating efficiency of the terminal, and reducing the power consumption of the terminal.

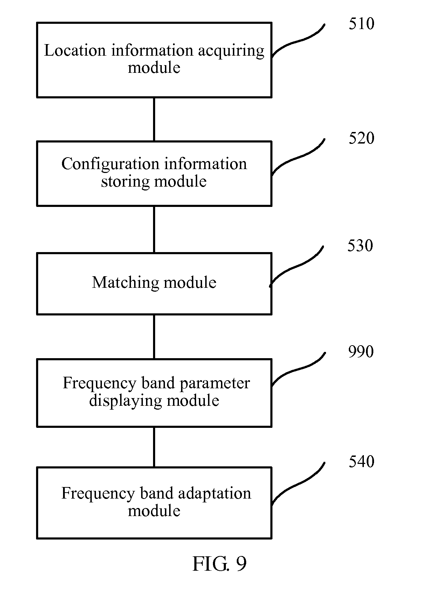

In an embodiment of a terminal provided in the present invention, and as shown in FIG. 9, the terminal further includes:
a frequency band parameter displaying module 990, configured to: when the terminal receives an instruction for querying or setting a frequency band parameter from a user, according to configuration information which is of the terminal and is stored by the configuration information storing module 520, provide the user with a frequency band parameter interface to query or set a frequency band, where the interface only displays an available frequency band of the terminal at the location which is matched out by the matching module 530, or displays all frequency bands supported by the terminal, but the forbidden frequency band at the location is in a non-selectable state.

The frequency band parameter displaying module 990 may exist before or after any module after the matching module 530.

That is, when the user queries or sets the frequency band parameter, in order to prevent the user from setting or using the forbidden frequency band of the terminal at the location, the forbidden frequency band is not displayed, or is displayed but cannot be selected. In this way, process steps may be economized; meanwhile, an incorrect operation of the user may be avoided and the user experience for the terminal is improved.

Location identification may be stored in the terminal and is used to indicate location information of the terminal, where the indicated location information may include: unknown, a preset area, and a non-preset area; and the location identification is set to be unknown after the terminal is rebooted.

After the terminal searches and finds a cell and acquires an MCC value, the location information indicated by the location identification is judged. If it is a preset area, the location information indicated by the location identification does not change. If it is a non-preset area and the MCC value is an MCC value of a preset area, the location information indicated by the location identification is set to be a preset area. If it is a non-preset area and the MCC value is an MCC value of a non-preset area, the location information indicated by the location identification does not change.

If the location information which is of the terminal and is indicated by the location identification is unknown and the MCC value is the MCC value of a preset area, the location information indicated by the location identification is set to be a preset area; and if the location information which is of the terminal and is indicated by the location identification is unknown and the MCC value is the MCC value of a non-preset area, the location information indicated by the location identification is set to be a non-preset area.

When the terminal receives the instruction for querying or setting the frequency band parameter from the user, it is judged whether the location information indicated by the location identification is a preset area; and if yes, the user is provided with the frequency band parameter interface to query or set the frequency band, where the interface only displays an available frequency band of the terminal in the preset area, or displays all frequency bands supported by the terminal but the forbidden frequency band in the preset area is in a non-selectable state. When the preset area is a certain country, a purpose of restricting the terminal from using the forbidden frequency band in the country can be achieved. When the user leaves the country for a foreign country, if a frequency band parameter of the terminal needs to be set, the user needs to reboot the terminal and then set the frequency band parameter.

When the MCC value is judged, if the MCC value is equal to an MCC value which is used for test, the location information indicated by the location identification may not change.

The preset area in the indicated location information may specifically be a certain country, and the indicated location information may specifically include: unknown, domestic, and oversea. The indicated location information may also be other location information which has a meaning similar to the terms unknown, domestic, and oversea. In this embodiment, the terms domestic and oversea are both given for a certain country.

The terminal provided in the embodiment can avoid an incorrect operation of the user, and improves the user experience in a certain degree. For details, reference may be made to descriptions in the method embodiment.

In an embodiment of the terminal provided in the present invention, the configuration information which is of the terminal and is stored by the configuration information storing module 520 may specifically be correspondence between a location of the terminal and a frequency band, and includes correspondence between the location of the terminal and an available frequency band at the location and/or correspondence between the location of the terminal and the forbidden frequency band at the location. When the configuration information is the correspondence between the location of the terminal and the available frequency band at the location, the forbidden frequency band at the location may not belong to the available frequency band at the location; and when the configuration information is the correspondence between the location of the terminal and the forbidden frequency band at the location, the available frequency band at the location may not belong to the forbidden frequency band at the location.

It should be noted that, in this specification, the registering for the frequency band that the cell resides in substantially refers to registering for a PLMN corresponding to the cell. In the present invention, the forbidding registering for a certain frequency band includes not searching for the frequency band when searching a network, or when searching a network, searching for the frequency band but not initiating registration for the frequency band.

Persons of ordinary skill in the art may understand that all or a part of the steps in the method of the foregoing embodiments can be implemented by a program instructing relevant hardware, and the program may be stored in a readable storage medium of a terminal. When the program runs, all or a part of the foregoing steps are performed. The storage medium includes, for example, FLASH and EEPROM.

The objectives, technical solutions, and beneficial effects of the present invention are described in further detail through the foregoing specific implementation manners. It should be understood that, different embodiments can be combined. The foregoing descriptions are merely specific implementation manners of the present invention, and are not intended to limit the protection scope of the present invention. Any combination, modification, equivalent replacement, or improvement made within the principle of the present invention shall fall within the protection scope of the present invention.

## Claims

1. A method for adapting a frequency band of a terminal, comprising:
acquiring location information of the terminal;
according to configuration information of the terminal, determining a forbidden frequency band of the terminal at a location indicated by the location information; and
forbidding the terminal to register for the forbidden frequency band.

2. The method according to claim 1, wherein before the determining, according to the configuration information of the terminal, the forbidden frequency band of the terminal at the location indicated by the location information, the method further comprises:
determining that the location indicated by the location information is within a preset area.

3. The method according to claim 2, wherein the preset area is a preset country.

4. The method according to any one of clams 1 to 3, wherein the forbidding the terminal to register for the forbidden frequency band comprises:
not searching for the forbidden frequency band when searching a network; or
when searching a network, searching for the forbidden frequency band but forbidding initiating registration for the forbidden frequency band.

5. The method according to any one of claims 1 to 4, wherein the location information is a mobile country code MCC value, and the acquiring the location information of the terminal is:
searching for a cell in frequency bands supported by the terminal, and if a cell is found, acquiring the MCC value from a broadcast message of the cell; or
the location information is a satellite positioning location information, and the acquiring the location information of the terminal is: acquiring the satellite positioning location information of the terminal through a satellite positioning system.

6. The method according to any one of claims 1 to 5, further comprising:
according to the configuration information of the terminal, determining an available frequency band of the terminal at the location indicated by the location information; if a frequency band which is set to be non-searchable or non-registrable exists in the available frequency band, setting the frequency band which is set to be non-searchable or non-registrable to be searchable or registrable, or prompting a user to set the frequency band which is set to be non-searchable or non-registrable to be searchable or registrable.

7. The method according to any one of claims 1 to 4, wherein the location information is a mobile country code MCC value;
the acquiring the location information of the terminal is:
searching for a cell in frequency bands supported by the terminal, and if a cell is found, acquiring the MCC value from a broadcast message of the cell; and
the method further comprises:
judging whether a frequency band that the found cell resides in belongs to the forbidden frequency band; if yes, executing the forbidding the terminal to register for the forbidden frequency band; otherwise, registering for the frequency band that the cell resides in; and
the forbidding the terminal to register for the forbidden frequency band is:
forbidding the terminal to register for the frequency band that the cell resides in.

8. The method according to claim 2 or 3, wherein the location information is a mobile country code MCC value;
the acquiring the location information of the terminal is:
searching for a cell in frequency bands supported by the terminal, and if a cell is found, acquiring the MCC value from a broadcast message of the cell; and
the method further comprises:
when it is judged that the location indicated by the location information is not within the preset area, registering for a frequency band that the cell resides in.

9. The method according to any one of claims 1 to 8, further comprising:
when the terminal receives an instruction for querying or setting a frequency band parameter from the user, providing, according to the configuration information of the terminal, the user with a frequency band parameter interface to query or set a frequency band, wherein the interface only displays the available frequency band of the terminal at the location, or displays all frequency bands supported by the terminal, but the forbidden frequency band at the location is in a non-selectable state.

10. The method according to any one of claims 1 to 9, wherein the configuration information of the terminal is correspondence between a location of the terminal and an available frequency band at the location; and a forbidden frequency band at the location does not belong to the available frequency band at the location; and/or
the configuration information of the terminal is correspondence between a location of the terminal and a forbidden frequency band at the location.

11. A computer program product, comprising computer program code, which, when executed by a computer unit, will cause the computer unit to perform the method of any one of claims 1 to 10.

12. A terminal for adapting a frequency band of the terminal, comprising:
a location information acquiring module, configured to acquire location information of the terminal;
a configuration information storing module, configured to store configuration information of the terminal;
a matching module, configured to, according to the configuration information, determine a forbidden frequency band of the terminal at a location indicated by the location information; and
a frequency band adaptation module, configured to forbid the terminal to register for the forbidden frequency band.

13. The terminal according to claim 12, further comprising:
a judging module, configured to judge whether the location indicated by the location information is within a preset area, wherein
the matching module is configured to, when the judging module judges that the location indicated by the location information is within the preset area, according to the configuration information, determine the forbidden frequency band of the terminal at the location indicated by the location information.

14. The terminal according to claim 13, wherein the preset area is a preset country.

15. The terminal according to any one of claims 12 to 14, wherein the frequency band adaptation module is configured to configure that the terminal does not search for the forbidden frequency band when searching a network, or configure that, when searching a network, the terminal searches for the forbidden frequency band but does not initiate registration for the forbidden frequency band.

16. The terminal according to any one of claims 12 to 15, wherein the location information is a mobile country code MCC value, and the terminal further comprises:
a network searching module, configured to search for a cell in frequency bands supported by the terminal; and
the location information acquiring module is configured to, when the network searching module searches and finds a cell in the frequency bands supported by the terminal, acquire the MCC value from a broadcast message of the cell.

17. The terminal according to any one of claims 12 to 15, wherein the location information is satellite positioning location information; and
the location information acquiring module is configured to acquire the satellite positioning location information of the terminal through a satellite positioning system.

18. The terminal according to any one of claims 12 to 17, wherein the matching module is further configured to, according to the configuration information, determine an available frequency band of the terminal at the location indicated by the location information; and
the frequency band adaptation module is further configured to, when a frequency band which is set to be non-searchable or non-registrable exists in the available frequency band, set the frequency band which is set to be non-searchable or non-registrable to be searchable or registrable, or prompt a user to set the frequency band which is set to be non-searchable or non-registrable to be searchable or registrable.

19. The terminal according to any one of claims 12 to 14, wherein the location information is a mobile country code MCC value, and the terminal further comprises:
a network searching module, configured to search for a cell in frequency bands supported by the terminal;
the location information acquiring module is configured to, when the network searching module searches and finds a cell in the frequency bands supported by the terminal, acquire the MCC value from a broadcast message of the cell;
the terminal further comprises:
a registering module, configured to, when a frequency band that the cell found by the network searching module resides in does not belong to the forbidden frequency band, register for the frequency band that the cell resides in; and
the frequency band adaptation module is configured to, when the frequency band that the cell found by the network searching module resides in belongs to the forbidden frequency band, forbid the terminal to register for the frequency band that the cell resides in.

20. The terminal according to claim 13 or 14, wherein the location information is a mobile country code MCC value, and the terminal further comprises:
a network searching module, configured to search for a cell in frequency bands supported by the terminal;
the location information acquiring module is configured to, when the network searching module finds a cell in the frequency bands supported by the terminal, acquire the MCC value from a broadcast message of the cell; and
the terminal further comprises:
a registering module, configured to, when the judging module judges that the location indicated by the location information is not within the preset area, register for the frequency band that the cell resides in.

21. The terminal according to any one of claims 12 to 20, further comprising:
a frequency band parameter displaying module, configured to, when the terminal receives an instruction for querying or setting a frequency band parameter from the user, according to the configuration information which is of the terminal and is stored by the configuration information storing module, provide the user with a frequency band parameter interface to query or set a frequency band, wherein the interface only displays the available frequency band of the terminal at the location, or displays all frequency bands supported by the terminal, but the forbidden frequency band at the location is in a non-selectable state.

22. The terminal according to any one of claims 12 to 21, wherein
the configuration information of the terminal is correspondence between a location of the terminal and an available frequency band at the location; and a forbidden frequency band at the location does not belong to the available frequency band at the location; and/or
the configuration information of the terminal is correspondence between a location of the terminal and a forbidden frequency band at the location.
